## Europäisches Patentamt

## European Patent Office

## Office européen des brevets

(11) Publication number: **0 051 652**
**B1**

# EUROPEAN PATENT SPECIFICATION

(45) Date of publication of patent specification: **26.09.84**

(21) Application number: **81901324.4**

(22) Date of filing: **08.05.81**

(86) International application number:
**PCT/DK81/00051**

(87) International publication number:
**WO 81/03142 12.11.81 Gazette 81/27**

(51) Int. Cl.³: **B 27 K 3/52,** C 04 B 41/22,
A 01 N 59/20

(54) **A METHOD FOR THE PREVENTION OR REMOVAL OF GROWTH OF ALGAE AND LICHENS ON POROUS BUILDING MATERIALS.**

(30) Priority: **09.05.80 DK 2025/80**

(43) Date of publication of application:
**19.05.82 Bulletin 82/20**

(45) Publication of the grant of the patent:
**26.09.84 Bulletin 84/39**

(84) Designated Contracting States:
**AT CH DE FR GB LI NL SE**

(56) References cited:
**EP-A-0 005 361**
**DE-B-1 671 164**
**DE-C- 53 691**
**DK-C- 58 321**
**NO-C- 25 964**
**NO-C- 93 385**
**SE-C- 8 265**
**SE-C- 116 158**
**US-A- 871 392**
**US-A-1 734 715**
**US-A-4 001 400**

(73) Proprietor: **KURE, Viggo**
**108, Adlersallé**
**DK-4540 Farevejle (DK)**

(72) Inventor: **KURE, Viggo**
**108, Adlersallé**
**DK-4540 Farevejle (DK)**

(74) Representative: **Lehn, Werner, Dipl.-Ing. et al**
**Hoffmann, Eitle & Partner Patentanwälte**
**Arabellastrasse 4 (Sternhaus)**
**D-8000 München 81 (DE)**

(56) References cited:
**H Walland, Wasch-, Bleich- und Appretur-Mittel, 2ed, 1925, published by Julius Springer (Berlin), see p 279, lines 37-39**

Courier Press, Leamington Spa, England.

## Description

Technical field

The present invention relates to a method for the prevention of growth of algae and lichens on porous building materials of concrete, tile and eternite by first treating the building materials with an aqueous solution of copper salt and then with a binder which binds copper compounds in the building materials.

Background art

It is well known that copper compounds are toxic to algae and lichens and can be used to protect building materials against growth of algae and lichens. Thus, it is known to impregnate porous building materials with copper sulphate and to impregnate building materials first with a soluble copper salt and then with a binder which precipitates insoluble or sparingly soluble copper compounds in the building materials.

However, the effect of the known methods is poor or relatively short-lived and for that reason there is a need for methods which can give a prolonged effect.

From DE—A—1 671 164 is known a method for treating building materials with an emulsion of wax in a soap solution and then with a solution of a metal salt which precipitates a water insoluble metal soap in the building material. The object of the treatment is to make the building materials hydrophobic, and nothing is said about the effect on algae and lichens, and copper salts are not mentioned as precipitation agents.

Disclosure of invention

It has now turned out that a desirable prolonged effect is obtained by the method according to the invention the characteristic feature of which is that a soap solution is used as the binder. It is assumed that hereby is caused a formation of copper compounds of such moderate solubility that the toxic effect maintains for a long period of time as distinct from the situation when insoluble copper compounds are precipitated.

The method of the invention is efficient when the treatment solutions are applied by simple coating, and it is therefore applicable to existing structures but may of course also be carried out by immersion of the individual pieces of building material in the treatment solutions prior to the use of the materials. The method does not result in formation of dark coloured copper compounds and is therefore also applicable to light coloured building materials such as concrete surfaces.

When the method is used for removal of existing growth of algae and lichens the treatment solutions are applied in the same way as when new building materials are treated. Hereby the growth is killed and loses its grip in the building materials and falls off so that the original colour of the building material is recreated. In the case of outdoor structures rain assists in washing off the killed growth.

The method according to the invention is preferably carried out with concentrated solutions of the copper salt and the soap, respectively, seeing that a single treatment with each solution is then sufficient to give a prolonged effect.

The invention is further illustrated by the following examples.

Example 1

Eternite sheets for roofing were first treated by coating with a concentrated aqueous solution of copper sulphate and then, also by coating, with a concentrated solution of soft soap (potassium soap). The eternite sheets were placed as a roofing on a dwelling house in 1960 and in 1979 it was ascertained that the roof was practically free from lichen and had retained the natural colour of the eternite sheets almost unchanged. This means a very much prolonged growth preventing effect compared to known methods where the duration of the effect is measured in months or very few years.

Example 2

An eternite roof made in 1962 and which in 1972 was dark from growth of lichen was treated by coating first with a concentrated solution of copper sulphate and subsequently with a concentrated solution of soft soap. After the treatment the lichens died and were gradually washed off by the rain, and at a judgement in 1979 the roof had still the natural grey colour of the eternite sheets and was without growth.

Example 3

A vertical surface of an old concrete bridge carrying a growth of black, brown and yellow algae and lichens was treated by coating within an area of about 1 m² first with a concentrated solution of copper sulphate and then with a concentrated solution of soft soap. The growth was killed and washed off so that the natural grey white colour of the concrete reappeared. A year after the treatment the concrete surface had retained its natural colour and no invasion of growth to the cleaned area from the surrounding uncleaned surface had taken place.

## Claims

1. A method for the prevention or removal of growth of algae and lichens on porous building materials of concrete, tile and eternite by first treating the building materials with an aqueous solution of a copper salt and then with a binder which binds copper compounds in the building materials, characterized by the use of a soap solution as the binder.

2. A method as claimed in claim 1, characterized in that the treatment is carried out by applying the solutions by coating.

3. A method as claimed in claims 1 and 2, characterized by the use of concentrated solutions of the copper salt and the soap, respectively.

**Patentansprüche**

1. Verfahren zum Verhindern oder Entfernen des Bewuchses von Algen und Flechten an porösen Baumaterialien aus Beton, Ziegel und Eternit, bei dem man die Baumaterialien zunächst mit einer wässrigen Lösung eines Kupfersalzes und dann mit einem Binder behandelt, welcher die Kupferverbindungen in den Baumaterialien bindet, dadurch gekennzeichnet, dass eine Seifenlösung als Binder verwendet wird.

2. Verfahren gemäss Anspruch 1, dadurch gekennzeichnet, dass man die Behandlung durchführt, indem man die Lösungen durch Überziehen aufbringt.

3. Verfahren gemäss Ansprüchen 1 oder 2, dadurch gekennzeichnet, dass man konzentrierte Lösungen des Kupfersalzes bzw. der Seife verwendet.

**Revendications**

1. Procédé de prévention de la croissance ou d'enlèvement d'algues ou de lichens sur des matériaux de construction poreux en béton, en tuiles et en "Eternit", qui consiste à traiter d'abord les matériaux de construction avec une solution aqueuse d'un sel de cuivre puis avec un liant qui fixe les composés de cuivre dans les matériaux de construction, caractérisé par le fait qu'on utilise une solution de savon comme liant.

2. Procédé selon la revendication 1, caractérisé par le fait que le traitement est effectué en appliquant les solutions par enduction.

3. Procédé selon les revendications 1 et 2, caractérisé par le fait qu'on utilise des solutions concentrées de sulfate de cuivre et de savon, respectivement.